# DEMANDE DE BREVET EUROPEEN

(11) **EP 1 923 800 A2**
(43) Date de publication de la demande: **21.05.2008**
(21) Numéro de dépôt: 07120579.3
(22) Date de dépôt: 13.11.2007
(51) Int. Cl.: G06F 17/30

(54) **Système de mise en correspondance d'exemplaires d'une base de données, dispositif de traitement de données, procédé de mise en correspondance, programme d'ordinateur et support de données**

(30) Priorité: 16.11.2006 FR 0654939
(71) Demandeur: France Télécom, 75015 Paris (FR)
(72) Inventeur: Henaff, Mari-Mai, 22300, Lannion (FR); Jezequel, Mickaël, 22700, Louannec (FR); Olivier-Martin, François, 22300, Lannion (FR)
(74) Mandataire: Potdevin, Emmanuel Eric

(57) **Abrégé**

L'invention concerne un système (10) de mise en correspondance d'exemplaires d'une base de données stockés sur un premier et un deuxième dispositif de traitement de données et sur un dispositif de traitement de données de référence (S), reliés par un réseau (12). Le système comprend:
- des moyens (24₁, 24₂, 24₃) de mise en correspondance bi-points liés respectivement à chaque terminal, aptes à mettre en correspondance l'exemplaire stocké sur un terminal avec l'exemplaire stocké sur le dispositif de traitement de données de référence, et
- des moyens (26₁, 26₂, 26₃) d'activation liés respectivement à chaque terminal, aptes à activer les moyens de mise en correspondance bi-points liés à un terminal,

Il comprend en outre des moyens (28) de commande des moyens d'activation liés au deuxième terminal en fonction de la réalisation d'un événement lié à l'activation des moyens de mise en correspondance bi-points liés au premier terminal.

## Description

La présente invention concerne un système de mise en correspondance d'exemplaires d'une base de données stockés dans plusieurs dispositifs de traitement de données. Dans l'exemple qui servira à illustrer l'invention, les dispositifs de traitement de données sont au moins un premier terminal, un deuxième terminal et un serveur, dit dispositif de référence. L'invention concerne également un procédé de mise en correspondance, un programme d'ordinateur exécutant un tel procédé et un support de données contenant un tel programme d'ordinateur.

D'une manière générale, une base de données désigne un ensemble de données d'un type quelconque. Cet ensemble de données peut être par exemple des données relatives à un agenda, à un carnet d'adresse, à un fichier, à un courriel, etc.

La mise en correspondance d'exemplaires d'une base de données consiste à établir et à maintenir une relation d'équivalence prédéfinie entre ces exemplaires.

Un exemplaire d'un type donné comprend généralement au moins un attribut auquel est associée une valeur. Il est à noter que deux exemplaires d'un même type ont au moins un attribut commun, qu'il soit identique ou vérifie une relation d'équivalence, mais peuvent également comprendre des attributs distincts, qui ne font pas l'objet d'une mise en correspondance. Par exemple, dans le cas d'un carnet d'adresse, un terminal de l'utilisateur peut comprendre un exemplaire d'une base de données répertoriant les noms, numéros de téléphone et adresses e-mail de différents contacts, alors qu'un autre terminal de ce même utilisateur comprend, en plus des attributs de l'exemplaire précédent, des attributs supplémentaires associés à chaque contact, comme leur adresse postale. Seuls les attributs « noms », « numéros de téléphone » et « adresses e-mail » font alors l'objet d'une mise en correspondance.

Une relation d'équivalence est établie lorsque des données appartenant à un ensemble de données prédéfini de chaque exemplaire sont équivalentes, c'est-à-dire qu'au moins un attribut commun ait une valeur contenant une même information, bien que cette information ne soit pas forcément retranscrite de façon identique dans les différents exemplaires, en fonction de règles internes à ces exemplaires. Par exemple, si deux exemplaires comportent un attribut « heure», le format associé à cet attribut peut être différent selon l'exemplaire. Dans ce cas, un premier exemplaire peut répertorier une entrée donnée avec pour valeur associée à l'attribut « heure » : « 3 P.M », l'autre exemplaire répertoriant cette même entrée avec pour valeur associée à l'attribut « heure » : « 15H », cette entrée étant équivalente dans les deux exemplaires. Un premier exemplaire peut également présenter les données associées à un attribut sous forme de valeurs numériques absolues, un second exemplaire présentant les données associées à cet attribut sous forme de valeurs numériques modulo 5. Dans ce cas, une entrée qui prend pour valeur associée à cet attribut « 16 » dans le premier exemplaire a pour valeur équivalente « 1 » dans le second exemplaire. Un autre exemple correspond au cas où un premier exemplaire stocke des données non chiffrées alors que le second exemplaire stocke les mêmes données sous forme chiffrées.

Il est courant qu'un utilisateur stocke des données dans plusieurs exemplaires d'une base de données, stockés sur plusieurs terminaux distincts, comme un ordinateur, un téléphone mobile, un PDA (acronyme anglais de Personal Digital Assistant), etc.

Si l'utilisateur modifie un premier exemplaire de la base de données, stocké sur un premier terminal (par exemple, s'il note un nouveau rendez-vous), la mise en correspondance permet de mettre à jour un deuxième exemplaire stocké sur un deuxième terminal, de sorte que le deuxième exemplaire prenne en compte les modifications effectuées par l'utilisateur dans le premier exemplaire.

On connaît, dans l'état de la technique, un système de mise en correspondance d'exemplaires d'une base de données stockés au moins sur un premier dispositif de traitement de données, dit premier terminal, sur un deuxième dispositif de traitement de données, dit deuxième terminal, et sur un dispositif de traitement de données dit de référence, ici un serveur, relié aux deux terminaux par un réseau, le système comprenant:
- des moyens de mise en correspondance bi-points liés respectivement à chaque terminal, aptes à mettre en correspondance l'exemplaire stocké sur un terminal avec l'exemplaire stocké sur le dispositif de traitement de données de référence, ces moyens comportant en particulier:
   o des moyens de mise à jour de l'exemplaire stocké sur le terminal à partir de l'exemplaire stocké sur le serveur,
   o des moyens de mise à jour de l'exemplaire stocké sur le serveur à partir de l'exemplaire stocké sur le terminal.
- des moyens d'activation liés respectivement à chaque terminal, aptes à activer les moyens de mise en correspondance bi-points liés à un terminal

La mise en correspondance d'exemplaires stockés sur une pluralité de terminaux est généralement réalisée selon les étapes suivantes:
- au cours d'une première vague, toutes les modifications apportées aux exemplaires de la pluralité de terminaux sont regroupées sur le serveur à des fins de centralisation (par une mise à jour mutuelle des exemplaires de chaque terminal et du serveur),
- au cours d'une deuxième vague, une mise en correspondance bi-points des exemplaires stockés sur tous terminaux de la première vague avec l'exemplaire stocké sur le serveur, sauf le dernier mis en correspondance avec le serveur lors de cette première vague, est réalisée (par une mise à jour de l'exemplaire de chacun de ces terminaux à partir de celui du serveur), pour propager les modifications du serveur au reste des terminaux.

Les moyens de mise en correspondance bi-points sont généralement conformes à la norme SyncML (acronyme anglais de Synchronisation Markup Language), permettant une mise en correspondance bi-points transparente pour l'utilisateur de l'exemplaire stocké sur un terminal et avec l'exemplaire stocké sur le serveur,.

Les moyens d'activation peuvent simultanément activer les moyens de mise à jour, d'une part, de l'exemplaire du terminal à partir de celui du serveur et, d'autre part, de l'exemplaire du serveur à partir de celui du terminal, ce qui provoque une mise à jour mutuelle des exemplaires respectifs du terminal et du serveur.

Ce système de l'état de la technique est donc uniquement apte à effectuer des mises en correspondance bi-points transparentes pour l'utilisateur entre les exemplaires du serveur et de chaque terminal. La mise en correspondance de tous les terminaux est toutefois effectuée par l'utilisateur, qui doit commander lui-même les moyens d'activation des moyens de mise en correspondance bi-points liés à chaque terminal, de façon à mettre en oeuvre les première et deuxième vagues telles que décrites ci-dessus, ou programmer pour ce faire la commande de ces moyens d'activation à un moment précis en créant un programme d'ordinateur adapté, fonctionnant à l'aide d'une horloge.

Toutefois, l'activation d'une mise en correspondance bi-points de l'exemplaire stocké sur le deuxième terminal avec l'exemplaire stocké sur le serveur peut être commandée par l'utilisateur alors que la mise en correspondance bi-points liée au premier terminal est encore en cours. Par conséquent, lorsque la mise en correspondance bi-points liée au deuxième terminal est activée, et que simultanément le serveur est en cours de mise en correspondance avec le premier terminal (c'est-à-dire en cours de réception de modifications apportées à l'exemplaire stocké sur le premier terminal), l'exemplaire stocké sur le deuxième terminal est mis en correspondance avec une version non mise à jour de l'exemplaire stockée sur le serveur. Cette simultanéité des mises en correspondance bi-points est susceptible de générer des erreurs, les modifications effectuées par l'utilisateur dans l'exemplaire stocké sur le premier terminal n'étant pas communiquées à l'exemplaire stocké sur le deuxième terminal dans leur intégralité.

L'invention a pour objet un système de mise en correspondance du type précité, caractérisé en ce qu'il comprend en outre des moyens de commande aptes à commander les moyens d'activation liés au deuxième terminal en fonction de la réalisation d'un événement lié à l'activation des moyens de mise en correspondance bi-points liés au premier terminal.

L'activation des moyens de mise en correspondance bi-points liés au deuxième terminal est déclenchée uniquement après la réalisation d'un événement lié au premier terminal. Cet événement renseigne le système sur l'avancement de la mise en correspondance bi-points de l'exemplaire stocké sur le premier terminal avec l'exemplaire stocké sur le dispositif de référence, et lui indique qu'il peut activer la mise en correspondance bi-points liée au deuxième terminal. Ainsi, grâce à l'invention, lorsqu'un exemplaire d'un terminal est mis en correspondance avec un exemplaire du dispositif de référence, l'utilisateur est assuré qu'il disposera d'un exemplaire prenant en compte toutes les modifications apportées aux autres exemplaires.

Le système selon l'invention permet donc d'obtenir un système de mise en correspondance multi-points fiable et permettant de mettre en correspondance plusieurs terminaux de façon transparente pour l'utilisateur.

Avantageusement, le système comprend des moyens de comparaison de l'exemplaire stocké sur le terminal avec l'exemplaire stocké sur le dispositif de traitement de données de référence et des moyens de commande aptes à commander les moyens d'activation liés au terminal en fonction du résultat de la comparaison.

Ainsi, grâce aux moyens de comparaison, il est possible d'éviter les mises en correspondance bi-points inutiles entre les exemplaires d'un terminal et du dispositif de référence pour lesquels la relation d'équivalence prédéfinie est déjà établie avant la mise en correspondance.

Les moyens de comparaison permettent donc dans certains cas un allègement du nombre de mises en correspondance bi-points effectuées par le système, et, par conséquent, un gain de temps et un risque de génération d'erreurs moins important.

Dans un mode de réalisation particulier, le système comprend des moyens de détermination d'une séquence d'activation des terminaux et des moyens de commande aptes à commander les moyens d'activation de ces terminaux en fonction de la séquence.

De cette façon, les moyens de détermination d'une séquence d'activation déterminent l'ordre dans lequel doit être effectuée l'activation des moyens de mise en correspondance bi-points liés à chaque terminal, ce afin d'assurer :
- la mise en correspondance totale des terminaux du système, ou
- la mise en correspondance partielle dans le cas où l'utilisateur décide de ne mettre en correspondance qu'une partie des terminaux.

Ainsi, l'utilisateur n'a pas à construire lui-même une séquence d'activation. Le système selon l'invention est en effet apte à construire une séquence optimale et à commander l'exécution de la mise en correspondance en fonction de cette séquence. Une fois déclenchée, la mise en correspondance est donc effectuée de façon transparente pour l'utilisateur.

Avantageusement, les moyens de détermination de la séquence d'activation comprennent des moyens d'analyse de statistiques relatives à la fréquence des modifications effectuées dans chaque exemplaire.

L'analyse de ces statistiques permet de déterminer sur quel(s) exemplaire(s) l'utilisateur intervient peu, afin d'identifier le(s) terminal(ux) qui subissent peu ou pas de modifications. Lors de la construction de la séquence, on prévoit la mise en oeuvre de première et deuxième vagues telles que décrites précédemment. Dans ce cas, une mise en correspondance bi-points d'un exemplaire peu modifié avec l'exemplaire du dispositif de référence est judicieusement programmée à la fin de la première vague. Par conséquent, le dernier exemplaire mis en correspondance lors de la première vague est peu susceptible de comporter des modifications à transmettre au dispositif de référence. Comme les modifications effectuées dans les exemplaires mis en correspondance auparavant sont déjà répercutées dans le dernier exemplaire mis en correspondance lors de cette première vague, cet exemplaire et l'exemplaire précédemment mis en correspondance peuvent présenter la relation d'équivalence prédéfinie avec l'exemplaire du dispositif de référence dès la fin de la première vague. Cela évite d'effectuer une mise en correspondance bi-points supplémentaire de ces exemplaires avec l'exemplaire du dispositif de référence lors de la deuxième vague et permet donc de diminuer le temps total de la mise en correspondance.

Dans un mode de réalisation particulier, le système comprend, pour au moins un terminal, des moyens de détermination de l'état de la mise en correspondance bi-points de l'exemplaire stocké sur ce terminal avec l'exemplaire stocké sur le dispositif de traitement de données de référence et des moyens de commande aptes à commander les moyens d'activation liés au terminal en fonction de l'état de cette mise en correspondance.

Ainsi, à la fin d'une mise en correspondance de l'exemplaire stocké sur un terminal avec l'exemplaire du dispositif de référence, on vérifie l'état de celle-ci. Si elle est échouée, le système peut commander les moyens de mise en correspondance bi-points pour qu'elle soit à nouveau tentée, ce qui permet de diminuer le taux de mises en correspondance échouées et d'augmenter l'efficacité du système.

Dans un mode de réalisation particulier, l'événement lié à l'activation des moyens de mise en correspondance bi-points liés au premier terminal est la détermination de l'état de la mise en correspondance bi-points de l'exemplaire stocké sur le premier terminal avec l'exemplaire stocké sur le dispositif de traitement de données de référence.

Le système peut également comprendre des moyens de déclenchement de la mise en correspondance des exemplaires stockés dans les terminaux.

Ces moyens permettent le déclenchement de la mise en correspondance multi-points à la suite d'un événement particulier, par exemple une sollicitation de l'utilisateur. Ainsi, la mise en correspondance peut être mise en oeuvre uniquement lorsque des modifications ont été effectuées, ce qui permet d'éviter de mobiliser les ressources des terminaux inutilement.

Optionnellement, le système comprend des moyens de stockage dans lesquels sont stockés une liste de terminaux à mettre en correspondance.

Ainsi, le système permet à l'utilisateur d'effectuer des mises en correspondance modulables. Celui-ci peut en effet modifier la liste des terminaux à mettre en correspondance selon ses besoins. De cette façon, plusieurs terminaux peuvent être connectés au réseau sans pour autant être tous mis en correspondance à chaque fois.

Avantageusement, le système comprend des moyens de notification à au moins un terminal de la fin de la mise en correspondance des exemplaires stockés dans les terminaux, et, éventuellement, de l'état de celle-ci.

Ainsi, un terminal, et, par conséquent, l'utilisateur est averti de la terminaison de la mise en correspondance multi-points et de la réussite ou de l'échec de celle-ci.

L'invention a également pour objet un dispositif de traitement de données, dit de référence, comprenant un exemplaire d'une base de données, des exemplaires de cette base de données étant également stockés sur des dispositifs de traitement de données distincts du dispositif de référence, dits premier terminal et deuxième terminal, reliés au dispositif de traitement de données de référence par un réseau, caractérisé en ce que le dispositif de traitement de données de référence comprend des moyens de commande aptes à commander une mise en correspondance bi-points de l'exemplaire stocké sur le deuxième terminal avec l'exemplaire stocké sur le dispositif de traitement de données de référence en fonction de la réalisation d'un événement lié à une mise en correspondance bi-points de l'exemplaire stocké sur le premier terminal avec l'exemplaire stocké sur le dispositif de traitement de données de référence.

L'invention a également pour objet un procédé de mise en correspondance d'exemplaires d'une base de données stockés au moins sur un premier dispositif de traitement de données, dit premier terminal, sur un deuxième dispositif de traitement de données, dit deuxième terminal, et sur un dispositif de traitement de données dit de référence, relié aux deux terminaux par un réseau, le procédé comprenant, associée à chaque terminal, une étape d'activation d'une mise en correspondance bi-points de l'exemplaire stocké sur le terminal avec l'exemplaire stocké sur le dispositif de traitement de données de référence, l'étape d'activation de la mise en correspondance bi-points associée au premier terminal précédant l'étape d'activation de la mise en correspondance bi-points associée deuxième terminal, caractérisé en ce qu'il comprend en outre une étape de réalisation d'un événement relatif à la mise en correspondance bi-points de l'exemplaire stocké sur le premier terminal avec l'exemplaire stocké sur le dispositif de traitement de données de référence, l'étape d'activation de la mise en correspondance bi-points associée au deuxième terminal étant déclenchée par cette étape de réalisation d'un événement.

Dans un mode de réalisation particulier, l'étape de réalisation d'un événement est une étape de détermination de l'état de la mise en correspondance bi-points de l'exemplaire stocké sur le premier terminal avec l'exemplaire stocké sur le dispositif de traitement de données de référence.

Avantageusement, le procédé comprend en outre, pour au moins un terminal, une étape de comparaison de l'exemplaire stocké sur le terminal avec l'exemplaire stocké sur le dispositif de traitement de données de référence.

L'invention a également pour objet un programme pour un ordinateur formant un dispositif de traitement de données, comportant des instructions logicielles pour l'exécution du procédé selon l'invention et un support de données, comportant des moyens de stockage d'un programme d'ordinateur selon l'invention.

L'invention sera mieux comprise à la lecture de la description qui va suivre, donnée uniquement à titre d'exemple et faite en se référant aux dessins dans lesquels :
- la figure 1 est un schéma illustrant la structure générale d'un système de mise en correspondance d'exemplaires d'une base de données,
- la figure 2 est un diagramme représentant les étapes successives d'un procédé de mise en correspondance selon l'invention, mis en oeuvre dans le système de la figure 1,
- la figure 3 représente un groupe d'étapes du procédé représenté à la figure 2,
- la figure 4 est un schéma représentant l'ordre des étapes de mise en correspondance selon une séquence d'activation aléatoire des différents terminaux dans le système de la figure 1,

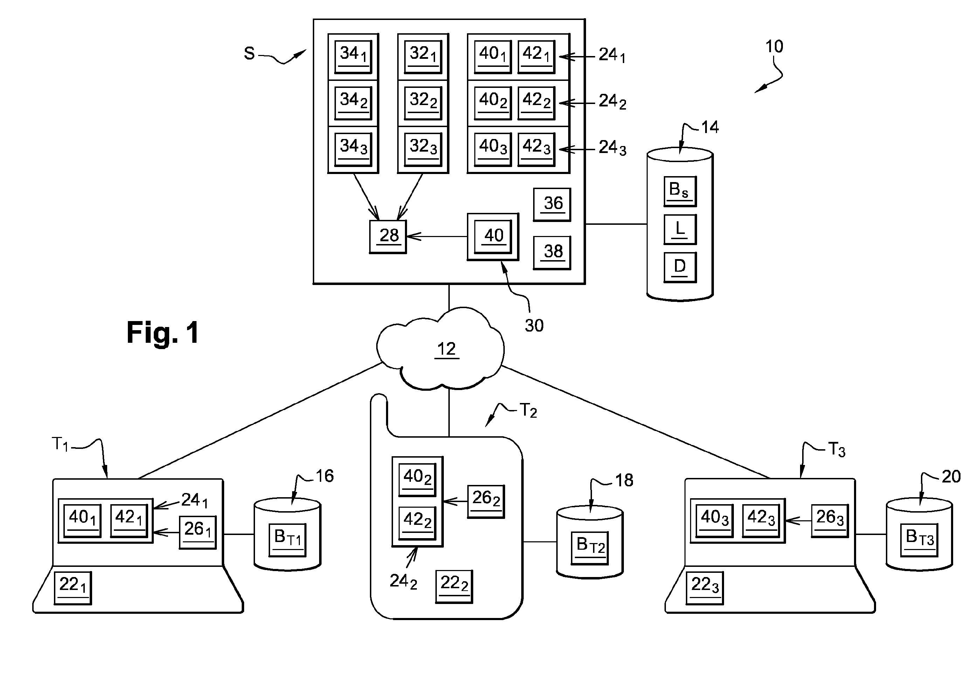

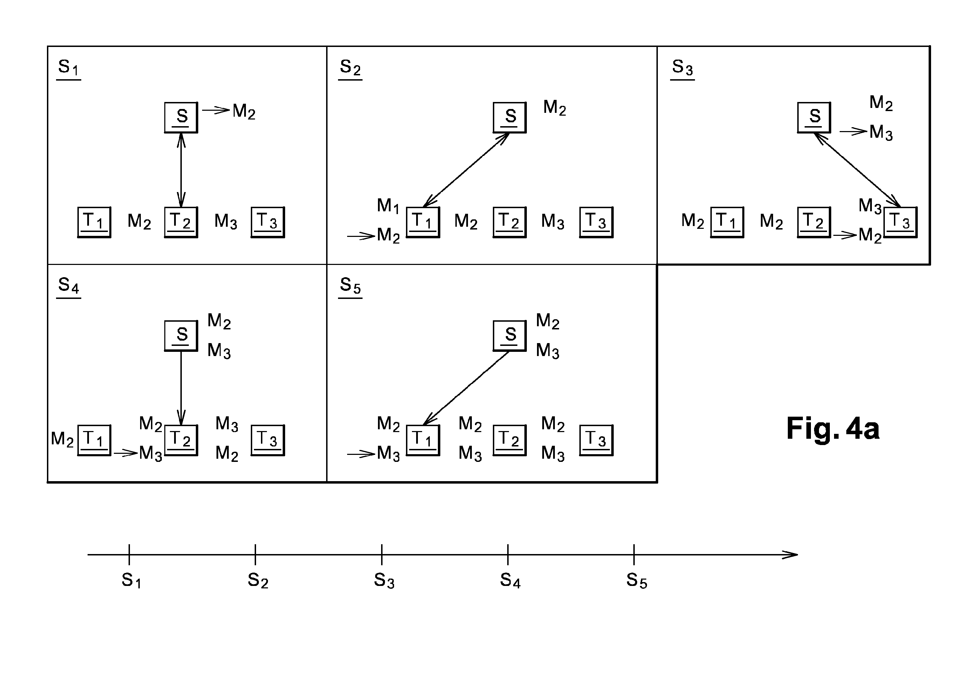

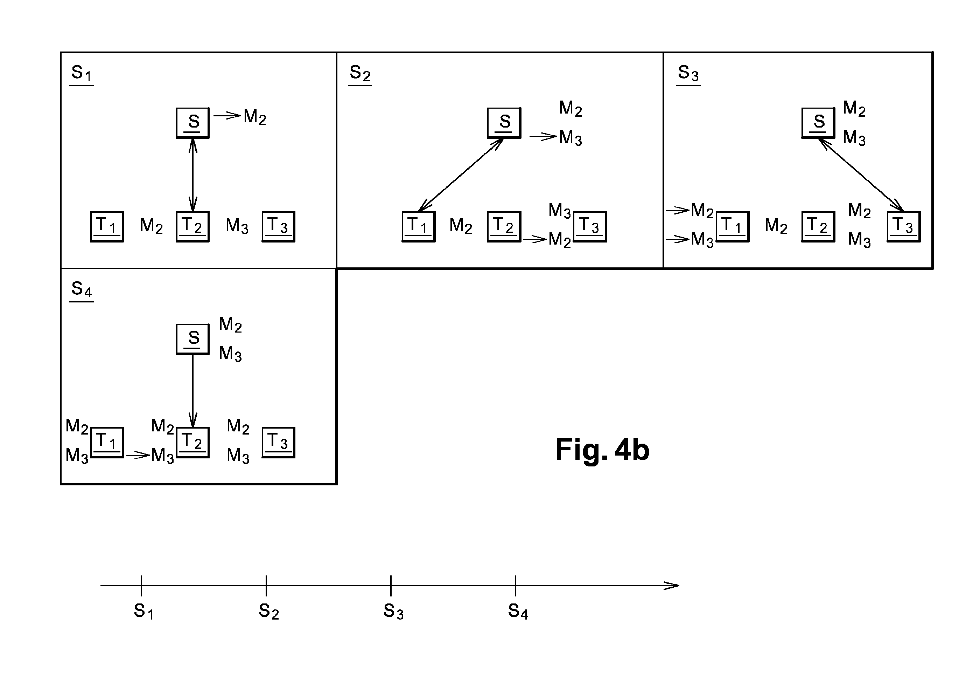

- la figure 4bis est un schéma représentant l'ordre des étapes de mise en correspondance selon une séquence d'activation des différents terminaux, optimisée à l'aide du système de la figure 1.

### Description du système de mise en correspondance:

Le système de mise en correspondance 10 représenté à la figure 1 comporte plusieurs dispositifs de traitements de données, comportant plusieurs terminaux T₁, T₂, T₃, qui dans l'exemple de réalisation décrit, sont au nombre de trois, et un dispositif de traitement de données de référence, tel qu'un serveur S.

Les trois terminaux T₁, T₂, T₃ sont reliés au serveur S par un réseau 12.

Chaque dispositif S, T₁, T₂, T₃ stocke un exemplaire d'une base de données. Le serveur S et chacun des terminaux T₁, T₂, T₃, est équipé pour cela respectivement de moyens de stockage 14, 16, 18, 20, stockant chacun un exemplaire d'une base de données, respectivement B_{S}, B_{T1}, B_{T2}, B_{T3}.

Le serveur S a, entres autres, pour fonction de maintenir une relation de correspondance entre l' Bₛ qu'il stocke et les exemplaires B_{T1}, B_{T2}, B_{T3} stockés sur les différents terminaux.

Chaque terminal T₁, T₂, T₃ comporte également des moyens d'interface respectifs 22₁, 22₂, 22₃, permettant à l'utilisateur de modifier chaque exemplaire B_{T1}, B_{T2}, B_{T3} de la base de données, stocké directement sur l'un des terminaux T₁, T₂, T₃.

Le système de mise en correspondance 10 comporte également des moyens 24₁, 24₂, 24₃ de mise en correspondance bi-points de l'exemplaire stocké sur un terminal avec l'exemplaire stocké sur le serveur, liés à chaque terminal T₁, T₂, T₃. Ces moyens 24₁, 24₂, 24₃ sont implémentés, d'une part, sur le serveur S et, d'autre part, sur le terminal du système 10 auxquels ils sont associés, respectivement T₁, T₂, T₃. Les moyens de mise en correspondance bi-points 24₁, 24₂, 24₃ comprennent notamment des moyens logiciels fonctionnant à l'aide d'une architecture client - serveur, définie par la norme SyncML.

Chaque terminal T₁, T₂, T₃ du système 10 comporte également des moyens 26₁, 26₂, 26₃ d'activation des moyens de mise en correspondance 24₁, 24₂, 24₃, comprenant notamment des moyens logiciels.

En outre, le serveur S du système 10 comprend des moyens 28 de commande des moyens d'activation 26₁, 26₂, 26₃. Ces moyens 28 sont aptes à commander les moyens d'activation 26₁, 26₂, 26₃ en fonction de données transmises aux moyens de commande par des moyens 30, 32₁, 32₂, 32₃ et 34₁, 34₂, 34₃, décrits ci-après.

Les moyens 30 sont des moyens de détermination d'une séquence d'activation des terminaux T₁, T₂, T₃, comprenant notamment des moyens logiciels. Ils sont destinés à déterminer l'ordre dans lequel doit être effectuée l'activation des moyens de mise en correspondance bi-points 24₁, 24₂, 24₃ liés à chaque terminal T₁, T₂, T₃. La séquence d'activation déterminée par ces moyens 30 assure la mise en correspondance totale des terminaux T₁, T₂, T₃ du système.

Les moyens 32₁, 32₂, 32₃ sont des moyens de détermination de l'état d'une mise en correspondance bi-points d'un terminal donné, respectivement T₁, T₂, T₃, avec le serveur S. Ils permettent de déterminer si la mise en correspondance bi-points liée à un terminal est encore en cours, a échoué ou a réussi, et notamment si la relation d'équivalence prédéfinie, que l'on cherche à maintenir à l'aide de la mise en correspondance, est établie entre les exemplaires de ce terminal et du serveur après la mise en correspondance bi-points.

En outre, les moyens 34₁, 34₂, 34₃ du serveur 10 servent à la comparaison des exemplaires de la base de données stockés respectivement sur un terminal (T₁, T₂, T₃) et le serveur S.

Le système 10 comprend également des moyens 36 d'inscription dans les moyens de stockage 14 du serveur S des adresses des terminaux à mettre en correspondance, ces moyens étant commandés par l'utilisateur. Ces moyens d'inscription 36 génèrent la création d'une liste L stockée dans les moyens 14 de stockage du serveur S.

Le système comprend également des moyens 38 de notification à un terminal de la fin de la mise en correspondance multi-points et de l'état de celle-ci.

Les moyens de mise en correspondance 24₁, 24₂, 24₃ du système 10 comprennent respectivement :
- des moyens 40₁, 40₂, 40₃, implémentés sur le serveur S, de mise à jour de l'exemplaire stocké sur un terminal, respectivement T₁, T₂, T₃, à partir de l'exemplaire stocké sur le serveur S, et
- des moyens 42₁, 42₂, 42₃, implémentés respectivement sur chaque terminal, T₁, T₂, T₃, de mise à jour de l'exemplaire du serveur S à partir de l'exemplaire stocké sur le terminal auquel ces moyens sont associés.

Les moyens 30 de détermination d'une séquence comprennent plus particulièrement des moyens 48 d'analyse de statistiques D relatives à la fréquence des modifications effectuées dans les exemplaires des terminaux T₁, T₂, T₃ et stockées dans les moyens 14 de stockage du serveur S. Ces moyens d'analyse 48 permettent l'optimisation de la séquence d'activation.

### Description du procédé :

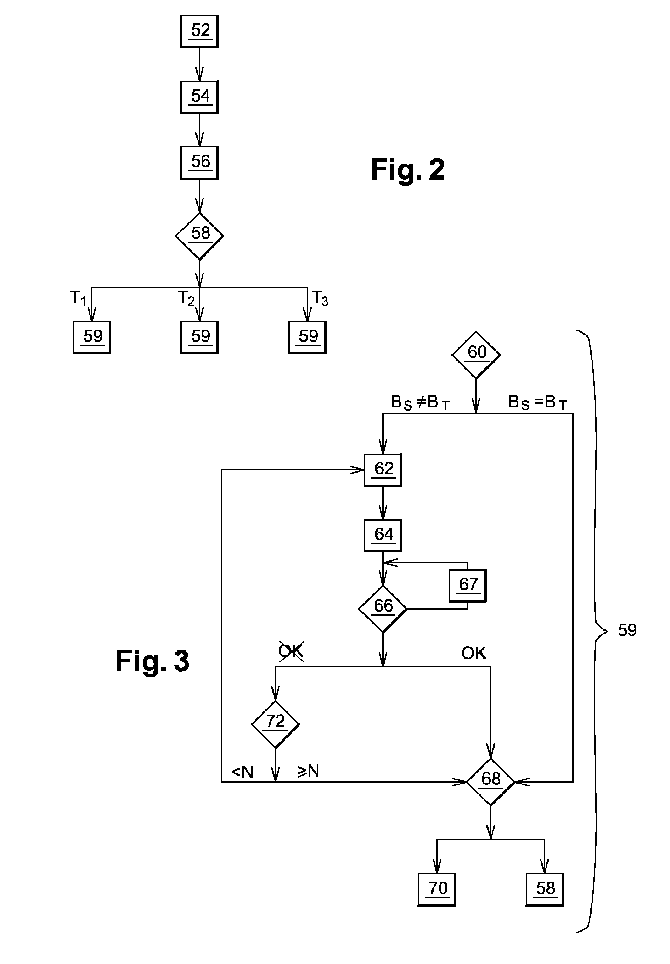

On va maintenant décrire, en référence à la figure 2, les étapes successives d'un procédé de mise en correspondance mis en oeuvre par le système 10 décrit précédemment.

Le procédé de mise en correspondance selon l'invention comprend une première étape 52 de déclenchement de la mise en correspondance. Cette étape peut être effectuée à la demande de l'utilisateur, à l'aide des moyens d'interface 22₁, 22₂, 22₃ de l'un des terminaux T₁, T₂, T₃, ou de façon automatique, par l'un des moyens d'activation 26₁, 26₂, 26₃ à la suite d'une modification de l'utilisateur dans l'exemplaire de la base de données du terminal correspondant T₁, T₂, T₃. Le mode de déclenchement automatique est conforme au mode SAN (acronyme anglais de Server Alerted Notification) de la norme SyncML. Selon le mode de déclenchement, les moyens d'interface 22₁, 22₂, 22₃ ou les moyens d'activation 26₁, 26₂, 26₃ forment des moyens de déclenchement de la mise en correspondance des exemplaires stockés dans les terminaux et le serveur.

L'étape 52 de déclenchement est suivie d'une étape 54 d'analyse des statistiques D relatives aux exemplaires B_{T1}, B_{T2}, B_{T3} stockés dans les terminaux compris dans la liste L (dans l'exemple: T₁, T₂, T₃). Cette étape est mise en oeuvre par les moyens 48.

Suite à cette étape 54 et en fonction des résultats fournis par les moyens 48, les moyens 30 déterminent, lors d'une étape 56, la séquence d'activation des terminaux T₁, T₂, T₃. Des séquences possibles d'activation des terminaux, permettant la mise en correspondance des exemplaires de tous les terminaux, sont représentées sur les figures 4 et 4bis. La figure 4 représente une séquence d'activation classique, et la figure 4bis représente une séquence telle que déterminée à la suite d'une étape 54 d'analyse de statistique.

Sur chacune de ces figures 4 et 4bis sont représentés schématiquement le serveur S et les terminaux T₁, T₂, T₃. Au déclenchement de la mise en correspondance, l'utilisateur a effectué une modification M₂ dans l'exemplaire B_{T2} stocké dans le terminal T₂ et une modification M₃ dans l'exemplaire B_{T3} stocké dans le terminal T₃.

Sur ces deux figures 4 et 4bis, on a uniquement représenté les étapes de mise en correspondance bi-points liées à chaque terminal. Les étapes S₁, S₂, S₃ et S'₁, S'₂, S'₃ sont des étapes de mise à jour mutuelle d'un terminal et du serveur S. Elles appartiennent à une première vague de mises en correspondance telle que décrite plus haut et sont destinées à transmettre les modifications effectuées dans l'exemplaire de chaque terminal T₁, T₂, T₃ au serveur S.

Les étapes suivantes (S₄ et S₅ pour la séquence représentée sur la figure 4 et S'₄ pour la séquence représentée sur la figure 4bis) sont des étapes de mise à jour de l'exemplaire d'un terminal à partir du celui du serveur, effectuées uniquement à l'aide des moyens 40. Ces étapes appartiennent à une deuxième vague de mises en correspondance telle que décrite plus haut et sont destinées à propager les modifications du serveur à tous les terminaux.

Dans l'exemple représenté à la figure 4, l'ordre d'activation des terminaux pour la première vague est déterminé aléatoirement et donne tout d'abord lieu à une mise à jour mutuelle du serveur S et du terminal T₂ (étape S₁), puis à une mise à jour mutuelle du serveur S et du terminal T₁ (étape S₂), et enfin à une mise à jour mutuelle du serveur S et du terminal T₃ (étape S₃). A la fin de la première vague, les exemplaires des terminaux T₁ et T₂ ne sont pas totalement mis à jour et le procédé nécessite deux étapes supplémentaires au cours de la deuxième vague pour établir la relation d'équivalence prédéfinie entre les exemplaires de ces terminaux et l'exemplaire du serveur S (étapes S₄ et S₅).

Au contraire, sur la figure 4bis, le terminal T₁ qui ne comporte pas de modifications effectuées par l'utilisateur depuis la dernière mise en correspondance multi-points est le dernier terminal mis en correspondance durant la première vague, lors de l'étape S'₃, car les moyens d'analyse 48 ont déterminé que peu de modifications étaient habituellement effectuées sur le terminal T₁.

Ainsi, à la fin de la première vague, seul le terminal T₂ n'est pas totalement mis à jour. Lors de la deuxième vague, il suffit donc de mettre à jour l'exemplaire du terminal T₂ à partir de celui du serveur S, lors d'une étape S'₄, pour que la relation d'équivalence prédéfinie soit établie entre les exemplaires de ces terminaux et l'exemplaire du serveur S. Ainsi, dans cet exemple, les moyens d'analyse 48 permettent l'économie d'une étape de mise en correspondance bi-points.

Il est à noter que l'étape de mise en correspondance bi-points de l'exemplaire stocké sur le terminal T₁ avec l'exemplaire stocké sur le serveur est évitée uniquement si le système 10 comporte des moyens 34₁, permettant de vérifier avant la mise à jour, que les exemplaires de T₁ et du serveur S sont équivalents.

A la suite de l'étape 56 de détermination d'une séquence d'activation, le procédé comprend une étape 58 de test lors de laquelle les moyens de commande 28 déterminent, à partir de la séquence d'activation, quel est le terminal à activer.

Nous envisageons les différents cas :

### Cas I : Le terminal suivant à activer dans la séquence est le terminal T₁ (suite à l'étape 58).

Dans ce cas, le procédé comprend un groupe d'étapes 59 de mise en correspondance bi-points, représenté à la figure 3. Ce groupe d'étapes comprend une première étape 60 de comparaison des exemplaires B_{T1}, B_{S} du terminal T₁ et du serveur S, à l'aide des moyens 34₁.
Sous- cas A : La relation d'équivalence prédéfinie n'est pas établie entre les exemplaires du serveur et du terminal T₁ (suite à l'étape 60 de comparaison).
   Le système 10 met alors en oeuvre une étape 62 d'activation de la mise en correspondance bi-points de l'exemplaire stocké sur le terminal T₁ avec l'exemplaire stocké sur le serveur S, à l'aide des moyens 26₁. Cette étape est suivie d'une étape 64 de mise à jour des exemplaires du terminal T₁ et/ou du serveur S, à l'aide des moyens de mise à jour 40₁ et/ou 42₁.
   A la suite de cette étape, le procédé comprend une étape 66 de détermination de l'état de la mise en correspondance bi-points, mise en oeuvre à l'aide des moyens 32₁. Lors de cette étape, l'état de la mise en correspondance bi-points peut être déterminé comme étant en cours, réussi ou échoué. Cette étape constitue une étape de réalisation d'un événement lié à l'activation des moyens de mise en correspondance bi-points liés au terminal T₃, qui est le suivant à activer dans la séquence. Il y a alors trois possibilités :
   *Possibilité 1 :* L'état de la mise en correspondance bi-points est déterminé comme en cours (suite à l'étape 66).
      Le procédé comprend une étape 67 d'attente durant un délai prédéterminé T et, lorsque cette étape d'attente est terminée, le système exécute à nouveau l'étape 66.
   *Possibilité 2:* L'état de la mise en correspondance bi-points est déterminé comme réussi (suite à l'étape 66).
      Le procédé comprend une étape de test 68, déterminant si la séquence d'activation est terminée, cette étape étant mise en oeuvre par les moyens de commande 28.
      *Hypothèse a* :La séquence d'activation est terminée (suite à l'étape 68).
         Lors de cette étape de test 68, s'il est déterminé que la séquence d'activation est terminée, le procédé comprend une étape 70 de notification à au moins un terminal, par exemple T₂, de la fin de la mise en correspondance et, éventuellement, de l'état de celle-ci. Le terminal peut par exemple être notifié à l'aide d'un SMS envoyé par les moyens 38 du serveur S. Le terminal T₂ peut ensuite avertir l'utilisateur à l'aide de ses moyens d'interface 22₂, en affichant par exemple la notification sur son écran.
      *Hypothèse b :* La séquence d'activation n'est pas terminée (suite à l'étape 68).
         Il est alors déterminé que des mises en correspondance bi-points supplémentaires doivent être activées. Les moyens de commande 28 exécutent donc à nouveau l'étape 58, déterminant quel terminal est à suivre dans la séquence d'activation.
   *Possibilité 3:* L'état de la mise en correspondance est déterminé comme échoué (suite à l'étape 66).
      Le procédé comprend alors une étape 72 de test, déterminant si l'échec s'est produit plus d'un nombre N de fois, N étant un nombre entier, par exemple 3.
      *Hypothèse a* : Le nombre d'échecs est supérieur ou égal à N (suite à l'étape 72).
         Dans cette hypothèse, l'état de la mise en correspondance de l'exemplaire du terminal T₁ avec l'exemplaire du serveur est déterminé comme échoué et le procédé exécute l'étape 68 (voir plus haut), de façon à continuer la mise en correspondance multi-points. Un tel nombre d'échecs signifie en effet que le terminal T₁ n'est pas disponible, notamment qu'il n'est pas connecté au réseau 12, ce qui ne doit toutefois pas empêcher la mise en correspondance bi-points des autres terminaux.
      *Hypothèse b :* Le nombre d'échecs est inférieur à N (suite à l'étape 72).
         Les moyens de commande 28 commandent alors les moyens d'activation du terminal T₁, après un délai donné, pour exécuter à nouveau l'étape 62. Cela permet de relancer la mise en correspondance bi-points du terminal T₁ et du serveur S sans aucune intervention de l'utilisateur et de diminuer le taux d'échecs d'un tel procédé de mise en correspondance.
Sous-cas B : La relation d'équivalence prédéfinie est établie entre les exemplaires du serveur et du terminal T₁ (suite à l'étape 60 de comparaison).
   Si, lors de l'étape 60, les moyens 34₁ de comparaison déterminent que les exemplaires du serveur S et du terminal T₁ sont équivalents, l'étape succédant à l'étape de comparaison est également l'étape de test 68, comme suite à une mise en correspondance bi-points réussie (voir plus haut).

### Cas II : Le terminal suivant à activer dans la séquence est le terminal T₂ ou T₃ (suite à l'étape 58).

Si, lors de l'étape 58, les moyens de commande 28 déterminent que le terminal T₂ ou T₃ est le suivant dans la séquence d'activation, le procédé comprend le groupe d'étapes 59 effectué à l'aide des moyens spécifiques au terminal, respectivement T₂ ou T₃.

Ainsi, le procédé selon l'invention permet d'effectuer des mises en correspondance multi-points fiables de plusieurs terminaux.

Les moyens employés dans l'invention et permettant d'exécuter le procédé selon l'invention sont notamment des moyens logiciels, plus particulièrement un programme d'ordinateur, stockés dans un support de données, notamment les moyens de stockage 14 du serveur.

On notera que l'invention n'est pas limitée au mode de réalisation précédemment décrit.

Les moyens 30, 36 implémentés sur le serveur, sont en outre optionnels car les terminaux à mettre en correspondance peuvent être pré-câblés et une séquence d'activation, non modifiable, de la mise en correspondance bi-points de ces terminaux peut être stockée dans les moyens de stockage 14 du serveur S.

En variante, les moyens d'activation 26 ne sont pas implémentés sur les terminaux. Ils sont par exemple implémentés sur le serveur

On peut également noter que les moyens 34 sont optionnels.

Il est également à noter que l'étape 60 de comparaison est optionnelle.

Cette étape de comparaison peut également être effectuée à la fin de la première vague de mise en correspondance, pour tous les terminaux à la fois.

De plus, l'état de la mise en correspondance peut également être déterminé comme échoué si l'étape d'attente 67 est effectuée plus d'un nombre N' de fois lors d'une même mise en correspondance bi-points.

En outre, la mise en correspondance multi-points peut être effectuée périodiquement par le système, sans nécessairement être déclenchée par un événement particulier.

## Revendications

1. Système (10) de mise en correspondance d'exemplaires (B_{T1}, B_{T2}, B_{T3}, B_{S}) d'une base de données stockés au moins sur un premier dispositif de traitement de données, dit premier terminal (T₁, T₂, T₃), sur un deuxième dispositif de traitement de données, dit deuxième terminal (T₁, T₂, T₃), et sur un dispositif de traitement de données dit de référence (S), relié aux deux terminaux par un réseau (12), le système comprenant:
- des moyens (24₁, 24₂, 24₃) de mise en correspondance bi-points liés respectivement à chaque terminal, aptes à mettre en correspondance l'exemplaire stocké sur un terminal avec l'exemplaire stocké sur le dispositif de traitement de données de référence, et
- des moyens (26₁, 26₂, 26₃) d'activation liés respectivement à chaque terminal, aptes à activer les moyens de mise en correspondance bi-points (24₁, 24₂, 24₃) liés à un terminal,
**caractérisé en ce qu'**il comprend en outre des moyens (28) de commande aptes à commander les moyens d'activation (26₁, 26₂, 26₃) liés au deuxième terminal (T₁, T₂, T₃) en fonction de la réalisation d'un événement lié à l'activation des moyens de mise en correspondance bi-points (24₁, 24₂, 24₃) liés au premier terminal (T₁, T₂, T₃).

2. Système de mise en correspondance selon la revendication 1, comprenant des moyens (34₁, 34₂, 34₃) de comparaison de l'exemplaire stocké sur un terminal (T₁, T₂, T₃) avec l'exemplaire stocké sur le dispositif de traitement de données de référence (S) et des moyens (28) de commande, aptes à commander les moyens d'activation (26₁, 26₂, 26₃) liés au terminal (T₁, T₂, T₃) en fonction du résultat de la comparaison.

3. Système de mise en correspondance selon l'une quelconque des revendications précédentes, comprenant des moyens (30) de détermination d'une séquence d'activation des terminaux (T₁, T₂, T₃) et des moyens de commande (28), aptes à commander les moyens d'activation (26₁, 26₂, 26₃) liés à ces terminaux en fonction de la séquence.

4. Système de mise en correspondance selon la revendication 3, dans lequel les moyens (30) de détermination de la séquence d'activation comprennent des moyens (48) d'analyse de statistiques (D) relatives à la fréquence des modifications effectuées dans chaque exemplaire.

5. Système de mise en correspondance selon l'une quelconque des revendications précédentes, comprenant, pour au moins un terminal (T₁, T₂, T₃), des moyens (32₁, 32₂, 32₃) de détermination de l'état de la mise en correspondance bi-points de l'exemplaire stocké sur ce terminal (T₁, T₂, T₃) avec l'exemplaire stocké sur le dispositif de traitement de données de référence (S) et des moyens de commande (28), aptes à commander les moyens d'activation (26₁, 26₂, 26₃) liés au terminal en fonction de l'état de cette mise en correspondance.

6. Système de mise en correspondance selon l'une quelconque des revendications précédentes, dans lequel l'événement est la détermination de l'état de la mise en correspondance bi-points de l'exemplaire stocké sur le premier terminal (T₁, T₂, T₃) avec l'exemplaire stocké sur le dispositif de traitement de données de référence (S).

7. Système de mise en correspondance selon l'une quelconque des revendications précédentes, comprenant des moyens (22₁, 22₂, 22₃ ; 26₁, 26₂, 26₃) de déclenchement de la mise en correspondance des exemplaires (B_{T1}, B_{T2}, B_{T3}) stockés dans les terminaux (T₁, T₂, T₃).

8. Système de mise en correspondance selon l'une quelconque des revendications précédentes, comprenant des moyens (38) de notification à au moins un terminal, de la fin de la mise en correspondance des exemplaires stockés dans les terminaux (T₁, T₂, T₃) et, éventuellement, de l'état de celle-ci.

9. Dispositif de traitement de données, dit de référence (S), comprenant un exemplaire (B_{S}) d'une base de données, des exemplaires de cette base de données étant également stockés sur des dispositifs de traitement de données distincts du dispositif de référence, dits premier terminal (T₁, T₂, T₃) et deuxième terminal (T₁, T₂, T₃), reliés au dispositif de traitement de données de référence (S) par un réseau (12), **caractérisé en ce que** le dispositif de traitement de données de référence (S) comprend des moyens (28) de commande aptes à commander une mise en correspondance bi-points de l'exemplaire stocké sur le deuxième terminal (T₁, T₂, T₃) avec l'exemplaire stocké sur le dispositif de traitement de données de référence en fonction de la réalisation d'un événement lié à une mise en correspondance bi-points (24₁, 24₂, 24₃) de l'exemplaire stocké sur le premier terminal (T₁, T₂, T₃) avec l'exemplaire stocké sur le dispositif de traitement de données de référence .

10. Procédé de mise en correspondance d'exemplaires (B_{T1}, B_{T2}, B_{T3}, B_{S}) d'une base de données stockés au moins sur un premier dispositif de traitement de données, dit premier terminal (T₁, T₂, T₃), sur un deuxième dispositif de traitement de données, dit deuxième terminal (T₁, T₂, T₃), et sur un dispositif de traitement de données dit de référence (S), relié aux deux terminaux par un réseau (12), le procédé comprenant, associée à chaque terminal, une étape (62) d'activation d'une mise en correspondance bi-points de l'exemplaire stocké sur le terminal avec l'exemplaire stocké sur le dispositif de traitement de données de référence (S), l'étape d'activation de la mise en correspondance bi-points associée au premier terminal précédant l'étape d'activation de la mise en correspondance bi-points associée au deuxième terminal, **caractérisé en ce qu'**il comprend en outre une étape (66) de réalisation d'un événement relatif à la mise en correspondance bi-points de l'exemplaire stocké sur le premier terminal (T₁, T₂, T₃) avec l'exemplaire stocké sur le dispositif de traitement de données de référence (S), l'étape (62) d'activation de la mise en correspondance bi-points associée au deuxième terminal étant déclenchée par cette étape (66) de réalisation d'un événement.

11. Procédé selon la revendication 10 dans lequel l'étape de réalisation d'un événement est une étape (86) de détermination de l'état de la mise en correspondance bi-points de l'exemplaire stocké sur le premier terminal (T₁, T₂, T₃) avec l'exemplaire stocké sur le dispositif de traitement de données de référence (S).

12. Procédé selon l'une quelconque des revendications 10 et 11, comprenant en outre, pour au moins un terminal (T₁), une étape (60) de comparaison de l'exemplaire stocké sur le terminal (T₁, T₂, T₃) avec l'exemplaire stocké sur le dispositif de traitement de données de référence (S).

13. Programme pour un ordinateur formant dispositif de traitement de données **caractérisé en ce qu'**il comporte les instructions logicielles pour l'exécution du procédé selon l'une quelconque des revendications 10 à 12.

14. Support de données **caractérisé en ce qu'**il comporte des moyens de stockage du programme d'ordinateur selon la revendication précédente.
